# EUROPÄISCHE PATENTSCHRIFT

(11) **EP 1 998 073 B1**
(45) Veröffentlichungstag und Bekanntmachung des Hinweises auf die Patenterteilung: **01.05.2013**
(21) Anmeldenummer: 08008972.5
(22) Anmeldetag: 15.05.2008
(51) Int. Cl.: F16F 15/04

(54) **Mechanische Kopplungsvorrichtung sowie mechanische Gangschaltung für ein Kraftfahrzeuggetriebe**
Mechanical coupling device and mechanical gearshift for a vehicle transmission
Dispositif d'embrayage mécanique ainsi que passage de vitesses mécanique pour une boîte de vitesses de véhicule automobile

(30) Priorität: 31.08.2007 DE 102007041289; 29.05.2007 DE 102007025047
(43) Veröffentlichungstag der Anmeldung: 03.12.2008
(73) Patentinhaber: GM Global Technology Operations LLC, Detroit, MI 48265-3000 (US)
(72) Erfinder: Geiberger, Axel, 55116 Mainz (DE)
(74) Vertreter: Strauss, Peter

(56) Entgegenhaltungen:
- EP-A1- 1 657 466
- DE-A1-102005 037 597
- JP-A- 63 095 513
- JP-U- 6 053 844
- US-A- 3 323 763
- US-A- 3 509 393
- US-A- 4 655 641

## Beschreibung

Die vorliegende Erfindung liegt auf dem Gebiet des Maschinenbaus. Dort sind vielfältige Übertragungselemente beziehungsweise Kopplungselemente zur Übertragung von Kräften und/oder Bewegungen bekannt. Mittels solcher Übertragungselemente werden entweder Antriebskräfte oder Bremskräfte oder auch Betätigungsbewegungen übertragen.

Dazu werden beispielsweise Getriebe, Gestänge oder Zugsysteme verwendet. Oft kommt es darauf an, bestimmte Bewegungen zu übertragen, insbesondere translatorische Bewegungen, und dabei andere Bewegungen mit anderen Zeitcharakteristiken, beispielsweise Vibrationen, zu entkoppeln. Für diesen Zweck sind mechanische Entkopplungs- und/oder Dämpfungselemente bereits in verschiedenen Gestaltungen bekannt.

Beispielsweise ist aus der DE 10 2005 037597 ein Übertragungselement bekannt, das beispielsweise für die Betätigung des Getriebes in einem Kraftfahrzeug geeignet ist. Aus der Schrift geht als teilweise elastisches, teilweise dämpfendes Element eine Kombination aus einem Innenring und einem Außenring hervor, die koaxial angeordnet und mit einem kegelabschnittsförmigen, zwischen diesen verlaufenden Steg miteinander verbunden sind.

Das Übertragungselement besteht dort beispielsweise aus einem elastomeren Kunststoff und der Innenring sowie der Außenring sind jeweils mit einem Anschlussorgan verbunden, um eine Kraft abgekoppelt von einer wirkenden Vibration übertragen zu können.

Aufgrund der kegelstumpfförmigen Struktur des Steges in dem Übertragungselement ergibt sich bei einer Belastung regelmäßig eine Kraftkomponente in Axialrichtung des Innenrings und/oder Außenrings. Diese ist gemeinhin unerwünscht.

Aus der EP 1 679 444 A2 ist eine Weiterentwicklung eines ähnlichen Übertragungselements bekannt, bei dem ebenfalls zwei konzentrische koaxiale Ringe aus einem elastomeren Material vorgesehen sind. Dort sind die Ringe durch einzelne, an ihren Umfängen verteilte Stege verbunden, wobei die Stege abwechselnd am unteren und oberen Ende der Doppelringanordnung vorgesehen sind, um eine Symmetrie zu schaffen, die das Auftreten axialer Kräfte im Belastungsfall verhindert.

Bekannt ist ferner die US 3,323,763 sowie die US 3,509,393. Letztere beschreibt einen elastischen Einbauring, welcher einen Innenring und einen Außenring aufweist, wobei zwischen dem Innenring und Außenring elastische Verbindungsstege angeordnet sind, welche als Schlaufen ausgebildet sind und einstückig mit dem Innenring und Außenring ausgebildet sind.

Der vorliegenden Erfindung liegt die Aufgabe zugrunde, eine mechanische Kopplungsvorrichtung zu schaffen, die eine Kraft möglichst zuverlässig und ohne das Auftreten unerwünschter Kraftkomponenten überträgt, wobei gewünschte Kraftübertragungscharakteristika sich möglichst durch geringe Gestaltungsänderungen leicht realisieren lassen sollen.

Diese Aufgabe wird erfindungsgemäß durch die Merkmale des Patentanspruchs 1 gelöst.

Die Erfindung bezieht sich weiterhin auf eine mechanische Gangschaltung mit den Merkmalen des Patentanspruchs 14.

Die Erfindung bezieht sich auf eine mechanische Kopplungsvorrichtung mit einem Übertragungselement. Eine gewünschte Dämpfungs- beziehungsweise Entkopplungs- oder Kraftübertragungscharakteristik ist grundsätzlich mit einem Übertragungselement mit einem Innenring und einem zu diesem koaxialen Außenring, wie aus dem Stand der Technik bekannt, realisierbar, wenn als zwischen dem Innenring und dem Außenring liegende Dämpfungselemente rohrabschnittsförmige Körper verwendet werden. Diese sind in Querrichtung, das heißt senkrecht zur Achsrichtung des jeweiligen Rohrabschnitts, bei entsprechender Gestaltung der Wanddicke bei Berücksichtigung der Materialeigenschaften leicht elastisch verformbar, wobei durch die Materialwahl der Dämpfungsanteil bestimmt werden kann und durch die Größe und Wanddicke sowie die Anzahl der entsprechenden rohrabschnittsförmigen Kompressionskörper der Verlauf der Elastizitätskurve bei veränderlicher zu übertragender Kraft des Übertragungselementes eingestellt werden kann. Dabei können lineare Kraft/Wegdiagramme ebenso wie abschnittsweise nicht lineare Diagramme je nach Gestaltung der Kompressionskörper als Charakteristik des Übertragungselementes realisiert werden.

Zusätzlich besitzt die Kopplungsvorrichtung ein erstes mit dem Außenring verbundenes Anschlusselement und ein zweites, mit dem Innenring verbundenes Anschlusselement vorgesehen ist. Das erste und das zweite Anschlusselement können beispielsweise in Form von Metallhülsen vorliegen, die mit dem Innenring beziehungsweise dem Außenring verpresst oder verklebt sind oder diesen in anderer Form spielfrei fassen. Das mit dem Außenring verbundene erste Anschlusselement kann beispielsweise direkt durch eine Löt- oder Schweißverbindung oder auch eine andere Verbindung wie Vernieten oder Verschrauben mit einem Gestänge oder einem beweglichen Zug wie einem Seilzug verbunden sein. Das zweite Anschlusselement kann beispielsweise einen Bolzen aufnehmen, der dieses durchsetzt und mit weiteren Teilen der kinematischen Kette verbunden ist.

Somit erlaubt die erfindungsgemäße Gestaltung mit geringen Mitteln die Anpassung der mechanischen Kopplungsvorrichtung an die gestellten mechanischen Übertragungsaufgaben. Dadurch kann für den konkreten Anwendungsfall eine optimierte Dämpfung beziehungsweise Vibrationsentkopplung erreicht werden.

Konstruktiv besonders einfach in der Handhabung und auch in der Herstellung sowie für die Einbindung in einen Kraftübertragungsweg durch Montage mit entsprechenden Fassungen ist ein kreisringförmiger Querschnitt von Innen- und/oder Außenring.

Es kann jedoch je nach der gewünschten Charakteristik und den zur Verfügung stehenden Fertigungsmethoden sowie den Anforderungen beim Einbau eine im Querschnitt elliptische Gestaltung von Innen- und/oder Außenring sinnvoll sein. Dabei kann beispielsweise auch einer der Ringe kreisringförmig, der andere im Querschnitt elliptisch geformt sein.

Grundsätzlich ist auch eine im Querschnitt viereckige Gestaltung der entsprechenden Rohrabschnitte des Innen- und/oder Außenrings möglich.

Vorteilhaft weisen die Kompressionskörper einen kreisringförmigen oder elliptischen Querschnitt auf, wodurch sie einfach zu fertigen und in ihrem mechanischen Verhalten leicht zu berechnen und anzupassen sind.

In einer vorteilhaften Ausgestaltung der Erfindung liegen die Kompressionskörper im entspannten Zustand des Übertragungselementes an dem Innenring und/oder dem Außenring an. Dabei ergibt sich ein spielfreies Zusammenwirken der einzelnen Elemente des Übertragungselementes.

Die Kompressionskörper können auch mit dem Innen- und/oder Außenring verbunden sein.

Dies schafft einen Zusammenhalt des Übertragungselementes, der dieses noch zuverlässiger und sein Verhalten gut berechenbar macht, da die Kompressionskörper damit ortsfest festgelegt sind.

In einer noch vorteilhafteren Ausgestaltung der Erfindung kann vorgesehen sein, dass die Kompressionskörper mit dem Innen- und/oder Außenring einstückig verbunden sind. Damit liegt das Übertragungselement ohne gegeneinander bewegbare Teile vor und ist entsprechend einfach und zuverlässig handhabbar, auch bei der Montage, wenn das Übertragungselement mit übrigen Teilen einer kinematischen Kette verbunden wird.

Besonders vorteilhaft wird die einstellbare Kraftcharakteristik, ebenso wie die Herstellung des Übertragungselementes, wenn die Kompressionskörper achsparallel zum Innenring und Außenring angeordnet sind.

Eine vorteilhafte Form in Bezug auf die Wirkung und in Bezug auf die Vereinfachung der Herstellung ergibt sich gemäß der Erfindung, wenn die Konturen von Innenring und Außenring einerseits und den Kompressionskörpern andererseits sich überschneiden.

Ebenso vorteilhaft kann vorgesehen sein, dass die Wanddicke wenigstens eines Kompressionskörpers im Bereich der Berührung mit dem Innenring und/oder dem Außenring vollständig innerhalb der Wand des entsprechenden Innenrings und/oder Außenrings verläuft.

Diese Ausführungsformen bringen insbesondere dann zusätzliche Vorteile, wenn der Innenring, der Außenring und die Kompressionskörper einstückig zusammenhängen, insbesondere in einem Spritzgussverfahren in einem Stück hergestellt sind oder bearbeitungstechnisch aus einem Block, beispielsweise durch spanende Bearbeitung, hergestellt sind.

Dabei kann das Übertragungselement beispielsweise durch Stanzen oder Fräsen aus einem Block hergestellt sein.

Statt eines Spritzgussverfahrens kann auch ein anderes formbildendes Verfahren wie beispielsweise Pressen oder Sintern, zum Beispiel bei der Verwendung von Polytetrafluorethylen eingesetzt werden.

Vorteilhafterweise kann der Innenring und/oder der Außenring aus einem elastischen Kunststoff, insbesondere einem Elastomer bestehen. Dabei kommt beispielsweise massiver Gummi in Frage oder auch ein volumenkompressibler Werkstoff wie Schaumgummi.

Die Erfindung bezieht sich auch auf eine mechanische Gangschaltung für ein Kraftfahrzeuggetriebe mit wenigstens einem Zug zur Verbindung eines Schalthebels mit dem Getriebe, wobei eine Kopplungsvorrichtung mit einem Übertragungselement gemäß der Erfindung vorgesehen ist. Die Kopplungsvorrichtung dient in diesem speziellen Fall der Kopplung des Gangschalthebels im Kraftfahrzeug, der manuell bedienbar ist, mittels wenigstens eines Zuges mit dem Getriebe. Der Zug kann beispielsweise durch ein Gestänge oder ein seilartiges Element realisiert sein. Durch das Übertragungselement beziehungsweise die Kopplungsvorrichtung werden die Vibrationen, die im Verbrennungsmotor entstehen und wenigstens teilweise auch auf das Getriebe übertragen werden, von dem Gangschalthebel entkoppelt, teilweise gedämpft und damit für den Fahrer, der den Gangschalthebel bedient, gar nicht oder zumindest vermindert wahrnehmbar.

Durch die spezielle Formgebung des Übertragungselementes gemäß der Erfindung sind je nach den speziellen Anforderungen verschiedene Charakteristika durch Wahl der Größe und der Wandstärke sowohl der Kompressionskörper als auch den Innenrings und des Außenrings optimiert einstellbar.

Im Folgenden wird die Erfindung anhand eines Ausführungsbeispiels in einer Zeichnung gezeigt und anschließend beschrieben.

Dabei zeigt:
- Fig. 1: verschiedene Kraft/Wegcharakteristiken, die mit einem Übertragungselement einstellbar sind;
- Fig. 2: das Übertragungselement in einer dreidimensionalen Ansicht;
- Fig. 3: eine Draufsicht in axialer Richtung auf das Übertragungselement gemäß Figur 2;
- Fig. 4: eine axiale Draufsicht auf ein weiteres Übertragungselement, sowie
- Fig. 5: eine axiale Draufsicht auf ein Obertragungselement in einer Ausführungsform der Erfindung.

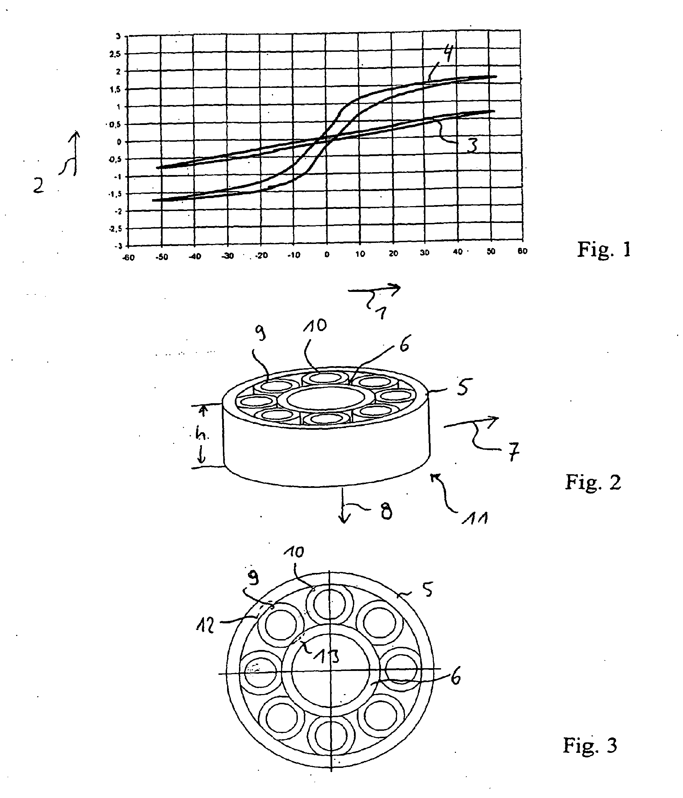

Die Figur 1 zeigt ein Diagramm, bei dem auf der y-Achse in Richtung des Pfeils 2 ein Verformungsweg eines Übertragungselementes und in Richtung der durch den Pfeil 1 angedeuteten x-Achse die die entsprechende Verformung verursachende Kraft aufgetragen ist.

In einem ersten Graph 3 ist eine typische lineare Charakteristik gezeigt, bei der der Verformungsweg annähernd proportional der Kraft ist, abgesehen von einer Hysterese, die die Charakteristik bei der Kompression von der Charakteristik bei der Entspannung des entsprechenden Übertragungselementes unterschneidet und durch Materialgedächtniseffekte bedingt ist.

In vielen Fällen ist eine nichtlineare Übertragungskennlinie sinnvoller, wenn beispielsweise Stöße abgefangen werden oder Vibrationen abgefangen oder gedämpft werden sollen. Entsprechende Dämpfungseffekte finden sich ebenfalls teilweise durch die Hysterese in der Kurve repräsentiert.

Ein derartiger nicht-linearer Graph ist in der Figur 1 mit 4 bezeichnet.

Die Figur 2 zeigt in dreidimensionaler Darstellung ein typisches Übertragungselement gemäß der Erfindung, das aus einem Außenring 5 beziehungsweise einem entsprechenden Rohrabschnitt mit im Querschnitt kreisringförmiger Ausbildung und einem Innenring 6, koaxial und im dargestellten Fall auch konzentrisch zu dem Außenring besteht. Der Außenring und der Innenring haben aus Gründen der Symmetrie, um im Fall einer Belastung in radialer Richtung, wie sie durch den Pfeil 7 dargestellt ist, keine axialen Bewegungen oder Kräfte in Richtung des Pfeils 8 entstehen zu lassen, gleiche Höhe h, ebenso wie die zwischen ihnen angeordneten Kompressionskörper 9, 10, die ebenfalls im Querschnitt Kreisringform aufweisen und alle Rohrabschnitte schließen an den Enden bündig ab.

Die Kompressionskörper sind gleichmäßig am Umfang zwischen dem Innenring 6 und dem Außenring 5 verteilt und mit beiden Ringen fest verbunden.

Dabei sind acht Kompressionskörper vorgesehen.

Das gesamte Übertragungselement 11 ist einstückig aus Gummi hergestellt mittels eines Vulkanisationsverfahrens.

Es wäre jedoch auch möglich, es aus einem Vollkörpers in Form eines Zylinders bei entsprechender Materialwahl durch Fräsen oder Stanzen herzustellen.

Auch eine Herstellung durch Strangpressen wäre denkbar.

In der Figur 3 ist in einer Draufsicht das Übertragungselement aus Figur 2 nochmals dargestellt und dort wird deutlich, dass die Konturen der Kompressionskörper 9, 10 teilweise, angedeutet durch die gestrichelten Linien 12, 13, innerhalb des Außenrings 5 beziehungsweise des Innenrings 6 verlaufen.

Bei einstückiger Herstellung ist eine derartige Formgebung besonders einfach erreichbar.

Das Übertragungselement 11 kann außer aus elastomeren Werkstoffen wie Gummi, Schaumgummi oder ähnlichem auch aus PTFE oder einem anderen möglichst elastisch verformbaren Kunststoff bestehen. Im Hochlastbereich ist sogar eine Herstellung aus Federstahl denkbar.

Durch die entsprechende Wahl der Wandstärken bei den Kompressionskörpern 9, 10 und beim Innenring beziehungsweise Außenring und durch die Wahl der Verhältnisse kann eine gewünschte Kraft/Wegcharakteristik eingestellt werden.

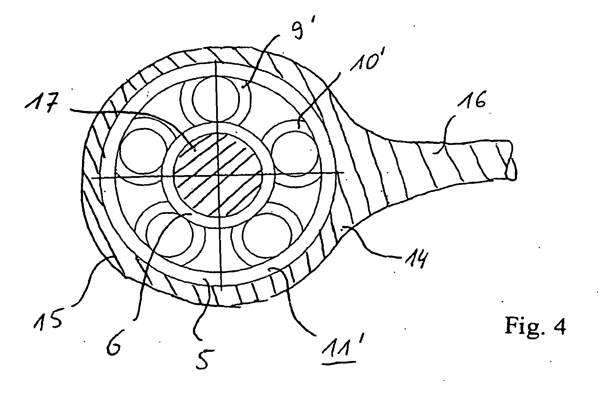

In der Figur 4 ist eine entsprechende mechanische Kopplungsvorrichtung gemäß der Erfindung mit einem Übertragungselement 11'dargestellt, das einen Außenring 5, einen Innenring 6 und fünf dazwischen angeordnete Kompressionskörper 9', 10' aufweist.

Die Kompressionskörper 9', 10' sind derart gestaltet, dass ihre Wandstärke im Bereich, in dem sie mit dem Innenring beziehungsweise dem Außenring zusammenhängen, vollständig in diesen verläuft. Hierdurch ergibt sich unter anderem auch eine materialsparende Bauweise.

Zudem ist in der Figur 4 ein erstes Anschlusselement 14 dargestellt, das eine Hülse 15 und einen Stutzen 16 aufweist, der mit der Hülse 15 fest und einstückig verbunden ist. Der Stutzen 16 läuft in einem Gestänge aus, das beispielsweise über ein Schalt- oder Wählkabel mit einem Schalthebel eines Kraftfahrzeuggetriebes direkt verbunden ist.

Innerhalb des Innenrings 6 ist ein Bolzen 17 vorgesehen, der beispielsweise unter elastischer Aufweitung des Innenrings 6 in diesen eingepresst und über ein nicht dargestelltes Gestänge mit einem Getriebe eines Kraftfahrzeugs verbunden sein kann.

Anstelle des Bolzens 17 kann beispielsweise auch eine hohle Hülse vorgesehen sein, in die ein Bolzen einpressbar ist. Alternativ kann in der Hülse auch eine Lagerschale befestigt sein, wenn die Anbindung an das Getriebe als Kugelzapfen ausgeführt ist.

Das erste und das zweite Anschlusselement bestehen typischerweise aus Stahl, um die entsprechenden zu übertragenden Kräfte aufzunehmen.

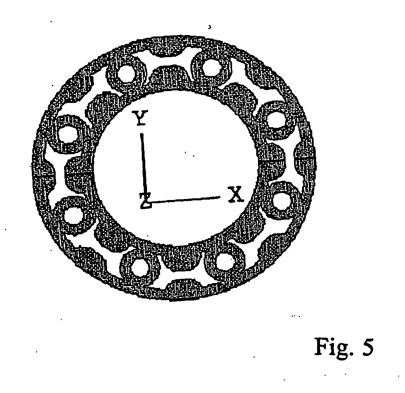

In der Figur 5 ist ein Übertragungselement gezeigt mit Verdickungen am Innen- und Außenring, die dem jeweils anderen Ring zugewandt sind. Es können Verdickungen auch nur an einem der Ringe vorgesehen sein. Die Verdickungen können als axial verlaufende Stege ausgebildet sein, die die volle axiale Länge oder auch nur einen Teil der Länge des Übertragungselementes überdecken. Die Verdickungen sind vorteilhaft zwischen den Kompressionskörpern angeordnet und können im Querschnitt gerundet sein. Sie können massiv oder hohl ausgebildet sein. Eine weitere Variante sieht im Querschnitt dreiecksförmige Verdickungen auf. Die Verdickungen hängen mit dem Innen- und/oder Außenring jeweils vorteilhaft einstückig zusammen. Sie können einander direkt gegenüber liegen, so dass sie bei hoher Belastung aneinander anliegen und somit das Übertragungselement weiter versteifen.

Im Ergebnis kann mittels der Erfindung eine Kopplungsvorrichtung verwirklicht werden, mit deren Hilfe insbesondere innerhalb eines Kraftfahrzeugs ein komfortables Schalten des Getriebes von Hand ermöglicht ist, ohne dass störende Vibrationen oder durch diese hervorgerufene Geräusche im Fahrgastraum hervorgerufen beziehungsweise dort hin übertragen werden. Die erfindungsgemäße Konstruktion lässt sich besonders einfach an individuelle Anforderungen anpassen.

## Patentansprüche

1. Mechanische Kopplungsvorrichtung zur Kopplung eines Gangschalthebels in einem Kraftfahrzeug mittels wenigstens eines Zuges mit dem Getriebe, aufweisend ein Übertragungselement (11,11') mit einem rohrabschnittförmigen Außenring (5) und einem innerhalb des Außenrings achsparallel zu diesem angeordneten rohrabschnittsförmigen Innenring (6), wobei zwischen dem Innenring und dem Außenring eine Mehrzahl von rohrabschnittsförmigen Kompressionskörpern (9,9',10,10') angeordnet ist, sowie mit einem ersten, mit dem Außenring (5) verbundenen Anschlusselement (14) und einem zweiten, mit dem Innenring (6) verbundenen Anschlusselement (17), wobei das erste Anschlusselement (14) mit dem Zug verbunden ist.

2. Kopplungsvorrichtung nach Anspruch 1, **dadurch gekennzeichnet, dass** der Innenring (6) und/oder der Außenring (5) einen kreisringförmigen Querschnitt, einen eliptischen Querschnitt oder einen viereckigen Querschnitt aufweisen.

3. Kopplungsvorrichtung nach einem der vorherigen Ansprüche, **dadurch gekennzeichnet, dass** die Kompressionskörper (9,9',10,10') einen kreisringförmigen oder ellipsoid ringförmigen Querschnitt aufweisen.

4. Kopplungsvorrichtung nach einem der vorherigen Ansprüche, **dadurch gekennzeichnet, dass** die Kompressionskörper (9,9',10,10') jeweils an dem Innenring (6) und dem Außenring (5) im entspannten Zustand anliegen.

5. Kopplungsvorrichtung nach Anspruch 4, **dadurch gekennzeichnet, dass** die Kompressionskörper (9,9',10,10') mit dem Innenring und/oder dem Außenring fest verbunden sind.

6. Kopplungsvorrichtung nach Anspruch 5, **dadurch gekennzeichnet, dass** die Kompressionskörper(9,9',10,10') mit dem Innenring und/oder dem Außenring einstückig verbunden sind.

7. Kopplungsvorrichtung nach einem der vorherigen Ansprüche, **dadurch gekennzeichnet, dass** die Kompressionskörper (9,9',10,10') achsparallel zu dem Innenring und dem Außenring angeordnet sind.

8. Kopplungsvorrichtung nach einem der vorherigen Ansprüche, **dadurch gekennzeichnet, dass** die Konturen von Innenring (6) und Außenring (5) einerseits und den Kompressionskörpern (9,9',10,10') andererseits sich überschneiden.

9. Kopplungsvorrichtung nach Anspruch 8, **dadurch gekennzeichnet, dass** die Wanddicke wenigstens eines Kompressionskörpers (9,9',10,10') im Bereich der Berührung mit dem Innenring und/oder dem Außenring vollständig innerhalb der Wand des entsprechenden Innenrings und/oder Außenrings verläuft.

10. Kopplungsvorrichtung nach einem der vorherigen Ansprüche, **dadurch gekennzeichnet, dass** der Innenring (6) und/oder der Außenring (5) und/oder die Kompressionskörper (9,9',10,10') aus einem Elastomer bestehen.

11. Kopplungsvorrichtung nach einem der vorherigen Ansprüche, **dadurch gekennzeichnet, dass** der Innenring(6), der Außenring (5) und die Kompressionskörper (9,9',10,10') gemeinsam aus einem Stück hergestellt sind.

12. Kopplungsvorrichtung nach einem der vorherigen Ansprüche, **dadurch gekennzeichnet, dass** der Innenring und/oder der Außenring auf ihrer dem jeweils anderen Ring zugewandten Mantelfläche in Axialrichtung verlaufende Stege tragen, die in Umfangsrichtung zwischen den Positionen der Kompressionskörper liegen.

13. Kopplungsvorrichtung nach Anspruch 12, **dadurch gekennzeichnet, dass** die Stege im Querschnitt jeweils halbkreisförmig ausgebildet sind und/oder dass jeweils zwei Stege einander an der Außenseite des Innenrings und an der Innenseite des Außenrings gegenüber liegen.

14. Mechanische Gangschaltung für ein Kraftfahrzeuggetriebe mit wenigstens einem Zug zur Verbindung eines Schalthebels mit dem Getriebe, **gekennzeichnet durch** eine mechanische Kopplungsvorrichtung gemäß einem der vorherigen Ansprüche.

## Claims

1. A mechanical coupling apparatus for coupling a gearshift lever in a motor vehicle by means of at least one train with the transmission, comprising a transmission element (11, 11') with a tubular outer ring (5) and a tubular inner ring (6) which is arranged within the outer ring in an axially parallel manner in relation thereto, with a plurality of tubular compression bodies (9, 9', 10, 10') being arranged between the inner ring and the outer ring, and with a first connection element (14) connected with the outer ring (5) and a second connection element (17) connected with the inner ring (6), with the first connection element (14) being connected with the train.

2. A coupling apparatus according to claim 1, **characterized in that** the inner ring (6) and/or the outer ring (5) have an annular cross section, an elliptical cross section or a quadrangular cross section.

3. A coupling apparatus according to one of the preceding claims, **characterized in that** the compression bodies (9, 9', 10, 10') have an annular or ellipsoid annular cross section.

4. A coupling apparatus according to one of the preceding claims, **characterized in that** the compression bodies (9, 9', 10, 10') respectively rest on the inner ring (6) and the outer ring (5) in the relaxed state.

5. A coupling apparatus according to claim 4, **characterized in that** the compression bodies (9, 9', 10, 10') are fixedly connected with the inner ring and/or the outer ring.

6. A coupling apparatus according to claim 5, **characterized in that** the compression bodies (9, 9', 10, 10') are integrally connected with the inner ring and/or the outer ring.

7. A coupling apparatus according to one of the preceding claims, **characterized in that** the compression bodies (9, 9', 10, 10') are arranged in an axially parallel manner relative to the inner ring and the outer ring.

8. A coupling apparatus according to one of the preceding claims, **characterized in that** the contours of the inner ring (6) and the outer ring (5) on the one hand and the compression bodies (9, 9', 10, 10') on the other hand intersect one another.

9. A coupling apparatus according to claim 8, **characterized in that** the wall thickness of at least one compression body (9, 9', 10, 10') extends completely within the wall of the respective inner ring and/or outer ring in the region of the contact with the inner ring and/or the outer ring.

10. A coupling apparatus according to one of the preceding claims, **characterized in that** the inner ring (6) and/or the outer ring (5) and/or the compression bodies (9, 9', 10, 10') consist of an elastomer.

11. A coupling apparatus according to one of the preceding claims, **characterized in that** the inner ring (6), the outer ring (5) and the compression bodies (9, 9', 10, 10') are jointly made from one piece.

12. A coupling apparatus according to one of the preceding claims, **characterized in that** the inner ring and/or the outer ring comprise axially extending webs on their jacket surface facing the respective other ring, which webs are situated in the circumferential direction between the positions of the compression bodies.

13. A coupling apparatus according to claim 12, **characterized in that** the webs are respectively arranged in a semicircular manner in the cross section and/or that two respective webs are situated opposite of one another on the outside of the inner ring and on the inside of the outer ring.

14. A mechanical gearshift for a motor vehicle transmission, comprising at least one train for connecting a gearshift lever with the transmission, **characterized by** a mechanical coupling apparatus according to one of the preceding claims.

## Revendications

1. Dispositif d'accouplement mécanique pour l'accouplement d'un levier de boîte de vitesses dans un véhicule à moteur à la boîte de vitesses au moyen d'un câble de traction, présentant un élément de transmission (11, 11') avec une bague extérieure (5) en forme de tronçon de tube et une bague intérieure (6) en forme de segment de tube disposée à l'intérieur de la bague extérieure parallèlement à son axe, dans lequel sont disposés entre la bague intérieure et la bague extérieure une pluralité d'éléments de compression (9, 9', 10, 10') en forme de tronçons de tube, et avec un premier élément de raccordement (14) relié à la bague extérieure (5) et un deuxième élément de raccordement (17) relié à la bague intérieure (6), le premier élément de raccordement (14) étant relié au câble de traction.

2. Dispositif d'accouplement selon la revendication 1, **caractérisé en ce que** la bague intérieure (6) et/ou la bague extérieure (5) présentent une section circulaire, une section elliptique ou une section quadrangulaire.

3. Dispositif d'accouplement selon l'une des revendications précédentes, **caractérisé en ce que** les éléments de compression (9, 9', 10, 10') présentent une section en forme d'anneau circulaire ou une section annulaire ellipsoïdale.

4. Dispositif d'accouplement selon l'une des revendications précédentes, **caractérisé en ce que** les éléments de compression (9, 9', 10, 10') reposent chacun sur la bague intérieure (6) et la bague extérieure (5) dans l'état détendu.

5. Dispositif d'accouplement selon la revendication 4, **caractérisé en ce que** les éléments de compression (9, 9', 10, 10') sont reliés de manière fixe à la bague intérieure et/ou à la bague extérieure.

6. Dispositif d'accouplement selon la revendication 5, **caractérisé en ce que** les éléments de compression (9, 9', 10, 10') sont reliés d'une seule pièce à la bague intérieure et/ou à la bague extérieure.

7. Dispositif d'accouplement selon l'une des revendications précédentes, **caractérisé en ce que** les éléments de compression (9, 9', 10, 10') sont disposés parallèlement à l'axe de la bague intérieure et de la bague extérieure.

8. Dispositif d'accouplement selon l'une des revendications précédentes, **caractérisé en ce que** les contours de la bague intérieure (6) et de la bague extérieure (5) d'une part et des éléments de compression (9, 9', 10, 10') d'autre part se recoupent.

9. Dispositif d'accouplement selon la revendication 8, **caractérisé en ce que** l'épaisseur de paroi d'au moins un élément de compression (9, 9', 10, 10') dans la zone de contact avec la bague intérieure et/ou la bague extérieure passe entièrement à l'intérieur de la paroi de la bague intérieure et/ou de la bague extérieure correspondante.

10. Dispositif d'accouplement selon l'une des revendications précédentes, **caractérisé en ce que** la bague intérieure (6) et/ou la bague extérieure (5) et/ou les éléments de compression (9, 9', 10, 10') sont composés d'un élastomère.

11. Dispositif d'accouplement selon l'une des revendications précédentes, **caractérisé en ce que** la bague intérieure (6), la bague extérieure (5) et les éléments de compression (9, 9', 10, 10') sont fabriqués ensemble à partir d'une seule pièce.

12. Dispositif d'accouplement selon l'une des revendications précédentes, **caractérisé en ce que** la bague intérieure et/ou la bague extérieure portent sur leur surface d'enveloppe tournée vers l'autre bague des barrettes orientées dans le sens axial qui se trouvent entre les positions des éléments de compression dans le sens de la circonférence.

13. Dispositif d'accouplement selon la revendication 12, **caractérisé en ce que** les barrettes ont une section en forme de demi-cercle et/ou **en ce que** les baguettes se font face deux par deux sur le côté extérieur de la bague intérieure et sur le côté intérieur de la bague extérieure.

14. Mécanisme de changement de rapport pour une boîte de vitesses de véhicule à moteur avec au moins un câble de traction pour relier un levier de boîte de vitesses à la boîte de vitesses, **caractérisé en ce qu'**il comprend un dispositif d'accouplement mécanique selon l'une des revendications précédentes.
